# EUROPÄISCHE PATENTSCHRIFT

(11) **EP 2 933 769 B1**
(45) Veröffentlichungstag und Bekanntmachung des Hinweises auf die Patenterteilung: **02.10.2019**
(21) Anmeldenummer: 15162306.3
(22) Anmeldetag: 02.04.2015
(51) Int. Cl.: G06Q 20/32, G06Q 20/38, G06Q 20/40, G06Q 20/42

(54) **TRANSAKTIONSVERFAHREN**
TRANSACTION METHOD
PROCÉDÉ DE TRANSACTION

(30) Priorität: 10.04.2014 DE 102014206949
(43) Veröffentlichungstag der Anmeldung: 21.10.2015
(73) Patentinhaber: Vodafone GmbH, 40549 Düsseldorf (DE)
(72) Erfinder: Seifert, Ulrich, 40468 Düsseldorf (DE); Nozulak, Thorsten, 45711 Datteln (DE)
(74) Vertreter: Jostarndt Patentanwalts-AG

(56) Entgegenhaltungen:
- EP-A2- 2 677 791
- WO-A1-2014/027110
- WO-A2-2007/044882
- WO-A2-2011/158121
- WO-A2-2013/062459
- DE-A1-102009 016 532
- DE-A1-102009 056 116
- DE-A1-102011 075 257
- US-A1- 2005 268 107
- Wikipedia: "Transaktionsnummer", , 1. April 2014 (2014-04-01), XP055210152, Gefunden im Internet: URL:https://de.wikipedia.org/w/index.php?t itle=Transaktionsnummer&oldid=129114631#Ge schichte [gefunden am 2015-08-28]

## Beschreibung

### Gebiet der Erfindung

Die Erfindung bezieht sich auf ein Verfahren zur Autorisierung von Transaktionen, ein entsprechend angepasstes Kommunikationsendgerät und ein entsprechend angepasstes System.

### Hintergrund der Erfindung

Die Autorisierung von Transaktionen mittels kabelloser und kabelgebundenen Kommunikationstechnologien erfolgt gemäß heutigem Standard mittels sogenannter Transaktionsnummern (TAN). Die TAN ist dabei ein Einmalpasswort, das nur für die jeweilige Transaktion gültig ist. Das häufigste Anwendungsgebiet findet sich dabei im Rahmen des Online-Banking. Eine Variante der Autorisierung mittels TAN stellt dabei das mTAN- oder auch SMS-TAN Verfahren dar.

Der Anwender oder Nutzer des mTAN-Verfahrens meldet sich mit seinem PC (Web-Browser) bei seiner Bank an und erstellt eine Transaktion oder Transaktionsanfrage. Nach dem Absenden dieser Transaktionsanfrage erstellt der Bank Server eine eindeutige TAN und sendet diese per Standard SMS über die dem Bank Server bekannte MSISDN (Mobile Subscriber Integrated Services Digital Network Number oder auch Mobile Station Integrated Services Digital Network Number) des Nutzers an das Telefon des Nutzers. Die in der SMS enthaltene TAN wird vom Nutzer im Browser seines PCs oder in der Banking Software eingetragen und an den Bank Server gesendet. Der Bank Server vergleicht die versendete und empfangene TAN und autorisiert bei Übereinstimmung die Transaktion.

### Zusammenfassung der Erfindung

Es ist eine Aufgabe der vorliegenden Erfindung, ein verbessertes Verfahren zur Autorisierung und schließlich auch zur Durchführung von Transaktionen zur Verfügung zu stellen.

Diese Aufgabe wird durch ein Verfahren zur Autorisierung von Transaktionen gelöst. Das Verfahren umfasst dabei die folgenden Schritte:
- Erzeugen einer eindeutigen Transaktionsnummer mittels einer Transaktionseinheit als Reaktion auf eine Transaktionsanfrage eines Transaktionsterminals eines Nutzers;
- Übermitteln der Transaktionsnummer von der Transaktionseinheit zum Transaktionsterminal mittels eines ersten gesicherten Kommunikationskanals;
- Übermitteln einer Authentifizierungsanfrage von der Transaktionseinheit zu einem Kommunikationsendgerät des Nutzers mittels eines zweiten Kommunikationskanals, der verschieden von dem ersten gesicherten Kommunikationskanal ist, wobei die Übermittlung der Authentifizierungsanfrage den Empfang einer Kurznachricht durch das Kommunikationsendgerät umfasst, und wobei die Authentifizierungsanfrage einen öffentlichen Schlüssel enthält, mit dem das Kommunikationsendgerät die Transaktionsnummer nach dem Empfangen verschlüsseln kann;
- Aufrufen einer Anwendung auf dem Kommunikationsendgerät nach Empfang der Kurznachricht;
- Empfangen der Transaktionsnummer mittels der Anwendung durch eine Benutzereingabe;
- Verschlüsseln der Transaktionsnummer mit dem öffentlichen Schlüssel;
- Übermitteln der verschlüsselten Transaktionsnummer mittels einer Kurznachricht an die Transaktionseinheit;
- Entschlüsseln der mittels der Kurznachricht übermittelten Transaktionsnummer durch die Transaktionseinheit mittels eines dem öffentlichen Schlüssel zugeordneten privaten Schlüssel; und
- Authentifizieren der Transaktion mittels eines Vergleichs der an den Transaktionsterminal übermittelten Transaktionsnummer mit der vom Kommunikationsendgerät empfangenen Transaktionsnummer.

Die Transaktionsnummer (TAN) wird im Rahmen des verbesserten Verfahrens von der Transaktionseinheit also im Fall des Online-Bankings von einem Bankserver übermittelt. Der erste Kommunikationskanal könnte z.B. eine Internetverbindung vom Bankserver zu einem PC oder auch mobilen Endgerät des Nutzers sein. Der Nutzer meldet sich mit seinem PC (Web-Browser) bei seiner Bank an und erstellt eine Transaktionsanfrage. Diese Anmeldung erfordert in der Regelung eine Identifizierung und Autorisierung des Nutzers. Die Internetverbindung erfolgt zudem in der Regel über einen gesicherten Kanal (z.B. Transport Layer Security (TLS) Protokoll). Die TAN wird somit anders als im mTAN Verfahren mittels einer gesicherten Verbindung an den Nutzer übertragen. Mit der Übermittlung der TAN an den Nutzer generiert der Bankserver oder eine mit diesem verbundene Rechnereinheit eine Authentifizierungs- oder Autorisierungsanfrage, die an einen Computer eines Kommunikationsdienstleister weitergeleitet wird, um die Authentifizierungsanfrage an das Kommunikationsendgerät des Nutzers weiterzuleiten. Das Kommunikationsendgerät kann dabei jedes Endgerät des Nutzers sein, das in der Lage ist, eine Authentifizierungsanfrage über den zweiten Kommunikationskanal (z.B. SMS-Nachricht) zu empfangen. Die Identifizierung des Kommunikationsendgerätes kann dabei direkt erfolgen, indem die im Bankserver oder in einer diesem zugeordneten Datenspeichereinheit hinterlegte MSISDN des Kommunikationsendgerätes an den Kommunikationsdienstleiter weitergeleitet wird, so dass dieser das Kommunikationsendgerät eindeutig identifizieren kann. Alternativ kann aber auch eine indirekte Identifizierung des Kommunikationsendgerätes vorgenommen werden, indem im Bankserver z.B. der Name des Nutzers und ggfs. die Anschrift hinterlegt ist. Diese Informationen werden zusammen mit der Authentifizierungsanfrage an den Kommunikationsdienstleister weitergeleitet, so dass dieser in die Lage versetzt wird, eine diesem Nutzer zugeordnete MSISDN zu ermitteln. Die Kurznachricht mit der Authentifizierungsanfrage kann dabei nur aus einem Triggersignal bestehen, das beim Empfang der Kurznachricht durch das Kommunikationsendgerät auf eine Anwendung verweist oder diese automatisch startet, die auf dem Kommunikationsendgerät installiert ist. Zusätzlich kann die Kurznachricht aber auch weitere Informationen über die Transaktion enthalten (Transaktionspartner, Transaktionsgegenstand wie z.B. eine Geldsumme etc.), die den Nutzer über die Transaktion informieren können, damit er diese z.B. eindeutig identifizieren kann.

Die Anwendung kann eine Authentifizierungsanwendung sein, die von der Bank oder dem Betreiber der Transaktionseinheit oder alternativ von dem Kommunikationsdienstleister zur Verfügung gestellt wird. Die Anwendung kann nach Empfang der Kurznachricht mit der Authentifizierungsanfrage automatisch den Nutzer dazu auffordern, die über den ersten Kommunikationskanal erhaltene TAN einzugeben. Alternativ könnte der Nutzer auch lediglich darauf aufmerksam gemacht werden, dass eine Authentifizierungsanfrage eingetroffen ist. Die Anwendung würde in diesem Fall nach Bestätigung durch den Nutzer gestartet werden und zur Eingabe der TAN auffordern. Die Eingabe kann manuell erfolgen, indem die TAN auf dem Transaktionsterminal angezeigt und durch den Nutzer abgelesen wird und schließlich mittels manueller Eingabe im Kommunikationsendgerät eingetippt oder akustisch eingegeben wird. Alternativ könnten der Transaktionsterminal und das Kommunikationsendgerät aber auch identisch sein, so dass die TAN mittels "copy" und "paste" in die Anwendung kopiert werden kann. Nach Entgegennahme der TAN durch das Kommunikationsendgerät wird diese wieder per Kurznachricht mit Hilfe des Kommunikationsdienstleister an die Transaktionseinheit also in diesem Fall den Bankserver übermittelt. Die vom Bankserver erzeugte eindeutige TAN und an den Transaktionsterminal übermittelte TAN wird mit der über den zweiten Kommunikationskanal übermittelten TAN verglichen und die Transaktion wird bei Übereinstimmung authentifiziert. Die TAN wird im Rahmen des geschilderten Verfahrens erst auf dem Rückweg mit der Kurznachricht übermittelt. Der Zeitraum zwischen Empfang der Kurznachricht und der Eingabe der TAN, in dem die TAN z.B. dem Kommunikationsdienstleiter zumindest implizit bekannt ist entfällt somit. Sofern man davon ausgeht, dass der erste Kommunikationskanal gesichert ist, beschränkt sich der Zeitraum für Manipulationen der Transaktion auf den Zeitraum zwischen der Übersendung der TAN vom Kommunikationsendgerät bis zum Empfang der TAN durch die Transaktionseinheit. Die Sicherheit könnte zudem dadurch noch weiter erhöht werden, indem die Anwendung auf dem Kommunikationsendgerät die Kurznachricht oder die TAN mit einer Zeitsignatur versieht. Die Transaktionseinheit würde die Transkation nur dann authentifizieren, wenn zwischen dem Empfang der Kurznachricht mit der TAN und dem mit der Zeitsignatur dokumentierten Zeitpunkt der Versendung der Kurznachricht mit dem Kommunikationsendgerät ein vorbestimmter Zeitraum nicht überschritten ist. Der Kommunikationsdienstleister könnte dabei ein Zeitsignal zu Verfügung stellen, so dass die Zeit der Transaktionseinheit mit der Zeit des Kommunikationsendgerätes auf einfache Weise synchronisiert werden kann.

Die Authentifizierungsanfrage enthält einen ersten Schlüssel enthält, mit dem das Kommunikationsendgerät die Transaktionsnummer nach dem Empfangen verschlüsseln kann, so dass nur die Transaktionseinheit in der Lage ist, die mittels Kurznachricht übermittelte Transaktionsnummer zu entschlüsseln.

Die Kurznachricht kann z.B. einen öffentlichen Schlüssel der Bank enthalten, der dem Kommunikationsendgerät mit der Kurznachricht mitgeteilt wird. Das Kommunikationsendgerät ist nun derart ausgestaltet, dass die TAN mit dem öffentlichen Schlüssel z.B. durch die Anwendung z.B. mittels eines Prozessors des Kommunikationsendgerätes oder aber mittels eines Identifizierungsmoduls (z.B. einer SIM-, USIM-Karte oder Ähnlichem) verschlüsselt wird. Ein Identifizierungsmodul der vorgenannten Art weist dabei eine Infrastruktur für Verschlüsselungen auf, die für diese Operation genutzt werden kann. Des Weiteren sind solche Identifizierungsmodule auf besondere Weise gegen Manipulationen abgesichert. Die Kurznachricht mit der so verschlüsselten TAN würde wieder mit Hilfe des Kommunikationsdienstleisters an die Transaktionseinheit also den Bank-Server übermittelt werden. Der Bank-Server kann nun selbst oder mittels einer im Verfügungsbereich der Bank befindlichen Rechnereinheit mittels eines zum öffentlichen Schlüssel zugehörigen privaten Schlüssels der Bank die TAN entschlüsseln.

Der Kommunikationsdienstleister würde somit nie in Besitz der unverschlüsselten TAN gelangen. Eine Manipulation der Transaktion würde somit weiter erschwert werden.

Alternativ oder zusätzlich kann die Kurznachricht auch selbst mittels des Kommunikationsdienstleisters z.B. mit der in Verbindung mit Kurznachrichten verwendbaren Over The Air (OTA) Funktionalität verschlüsselt werden. Das Verfahren umfasst in diesem Fall die weiteren Schritte:
- Übergeben der Authentifizierungsanfrage an einen Kurznachrichtendienst;
- Verschlüsseln der Authentifizierungsanfrage durch den Kurznachrichtendienst mit einem zweiten Schüssel;
- Entschlüsseln der Authentifizierungsanfrage durch das Kommunikationsendgerät;
- Verschlüsseln der Transaktionsnummer durch das Kommunikationsendgerät; und
- Entschlüsselung der Transaktionsnummer durch den Kurznachrichtendienst oder die Transaktionseinheit.

Der Kurznachrichtendienst könnte in diesem Fall z.B. einen sogenannten OTA-Server und ein Short Message Service Center (SSMC) umfassen. Die Authentifizierungsanfrage wird im Rahmen der Übermittlung an das Kommunikationsendgerät an den OTA-Server übergeben. Der OTA-Server ermittelt anhand der MSISDN des Kommunikationsendgerätes den zum Identifizierungsmodul des Kommunikationsendgerätes zugehörigen OTA-Schlüssel und verschlüsselt die Authentifizierungsanfrage mit diesem Schlüssel. Anschließend wird die verschlüsselte Authentifizierungsanfrage an das SMSC weitergeleitet und als SMS an das Kommunikationsendgerät übermittelte. Das Identifizierungsmodul entschlüsselt mittels des OTA-Schlüssels die Authentifizierungsanfrage und die Anwendung wird gestartet. Nach Eingabe der TAN wird diese mittels des öffentlichen Schlüssels der Bank verschlüsselt und der gesamte Inhalt der Nachricht wird zudem mit dem OTA-Schlüssel oder einem anderem dem Kurznachrichtendienst oder der Transaktionseinheit bekannten Schlüssel verschlüsselt bevor die Kurznachricht wieder an das SMSC versendet wird. Die Kurznachricht wird sodann z.B. mittels des OTA-Servers entschlüsselt und die mit dem öffentlichen Schlüssel verschlüsselte TAN wird an die Transaktionseinheit weitergeleitet. Die OTA-Verschlüsselung hat den Vorteil, dass der Zweck der SMS als Authentifizierungsanfrage nicht offenbart wird und ermöglicht somit eine zusätzliche Sicherheit gegenüber Manipulationen. Alternativ zu der OTA-Verschlüsselung könnte der Kommunikationsdienstleister auch eine für die jeweilige Transaktion spezifische Verschlüsselung der Authentifizierungsanfrage anbieten. So könnten z.B. Banktransaktionen seitens des Kommunikationsdienstleisters anderes verschlüsselt werden als z.B. Transaktionen im Zusammenhang mit Online-Einkäufen. Die Entschlüsselung könnte in diesem Fall auch z.B. durch die Transaktionseinheit erfolgen.

Das Verfahren könnte zudem derart ausgestaltet sein, dass ein Einmal-Passwort erstellt wird, das zusammen mit der Transaktionsanfrage an das Kommunikationsendgerät übermittelt wird. Die Transaktionsnummer wird vom Kommunikationsendgerät mit dem Einmal-Passwort verknüpft. Die erfolgreiche Authentifizierung der Transaktionsnummer würde sodann mit der Überprüfung des Einmal-Passworts verknüpft sein.

Der Kommunikationsdienstleister könnte für die Kommunikation mit der Transaktionseinheit eine spezielle Dateneinheit zur Verfügung stellen, die die Kommunikationsanfrage entgegennimmt. Diese könnte dazu verwendet werden, um eine sichere oder zumindest sicherere Verbindung zwischen der Transaktionseinheit und dem Kommunikationsdienstleister zu ermöglichen. Diese Dateneinheit könnte überdies dazu ausgestaltet sein, das Einmal-Passwort zu erzeugen und zusammen mit der Authentisierungsanfrage mittels des OTA-Servers verschlüsselt an das Kommunikationsendgerät zu versenden. Die Anwendung des Kommunikationsendgerätes könnte im einfachsten Fall die z.B. mit öffentlichen Schlüssel der Bank verschlüsselte TAN zusammen mit dem Einmal-Passwort als Kurznachricht versenden, wobei der Inhalt der Kurznachricht wieder mit der OTA Funktionalität des Identifikationsmoduls verschlüsselt ist. Das Einmal-Passwort wird auf dem Rückweg vom Kommunikationsdienstleiser entschlüsselt und die Transaktion mittels des Einmalpassworts überprüft. Der Kommunikationsdienstleiser könnte nun die weitere Übermittlung der TAN an die Transaktionseinheit blockieren, wenn die Kurznachricht vom Kommunikationsendgerät nicht das korrekte Einmal-Passwort enthält. Es könnte somit erschwert sein, Nachrichten mit potentiell schädlichem Inhalt an die Transaktionseinheit weiter zu leiten. Alternativ könnte der Kommunikationsdienstleister bei der Übermittlung der verschlüsselten TAN aber auch signalisieren, dass es bei der Übermittlung der Transaktionsanfrage zu Unstimmigkeiten gekommen ist. Die Transaktionseinheit könnte somit den Nutzer über den ersten Kommunikationskanal mittels des Transaktionsterminals über die Unstimmigkeiten informieren und gegebenenfalls Gegenmaßnahmen einleiten.

Im Rahmen des Verfahrens könnte zudem vorgesehen sein, dass die Transaktionseinheit prüft, ob der Transaktionsterminal dem Nutzer zugeordnet ist.

Die Identifizierung könnte z.B. durch eine Registrierung des Transaktionsterminals bei der Transaktionseinheit erfolgen. Die Identifizierung kann z.B. auf der Media Access Control (MAC) Adresse oder der MSISDN des Transaktionsterminals beruhen. Alternativ oder zusätzlich kann sich der Transaktionsterminal mit einem eindeutigen Zertifikat bei der Transaktionseinheit identifizieren. Die Identifizierung ermöglicht es den Zugriff bei sensiblen Transaktionen auf bestimmte oder sogar einen Transaktionsterminal zu begrenzen. Bestimmte Transaktionen könnten somit z.B. nur mittels eines eindeutig identifizierbaren Transaktionsterminals vorgenommen werden.

Das Verfahren könnte zudem derart ausgestaltet sein, dass das Kommunikationsendgerät für die Transaktionseinheit eindeutig identifizierbar ist. Dies könnte z.B. dadurch erfolgen, dass die MSISDN des Kommunikationsendgerätes entweder durch die Transaktionseinheit und/oder den Kommunikationsdienstleister überprüft wird. Alternativ oder zusätzlich könnte auch ein Zertifikat verwendet werden, das vom Kommunikationsendgerät mit der TAN an die Transaktionseinheit übermittelt wird. Die Identifizierung des Kommunikationsendgerätes kann Teil der Anwendung sein, die auf dem Kommunikationsendgerät läuft. Bei Installation der Anwendung könnte die Anwendung dem Endgerät eine charakteristische Kennung (z.B. MSISDN) entnehmen und diese an die Transaktionseinheit versenden. Diese Kennung würde anschließend immer zusammen mit der TAN an die Transaktionseinheit versendet werden.

Wenn sowohl der Transaktionsterminal als auch das Kommunikationsendgerät für die Transaktionseinheit eindeutig identifizierbar sind könnte die Authentifizierung der Transaktion nur dann erfolgen, wenn der Transaktionsterminal und das Kommunikationsendgerät nicht identisch sind. Auf diese Weise kann verhindert werden, dass für die Transaktionsanfrage und die Authentifizierungsanfrage das gleiche Gerät verwendet wird. Es würde somit für Manipulationsversuche nicht ausreichen, wenn man nur im Besitz des Transaktionsterminals oder des Kommunikationsendgerätes ist.

Zusätzlich zu einer Identifizierung des Nutzers beim Starten des Kommunikationsendgerätes könnte zudem vorgesehen sein, dass sich der Nutzer vor dem Empfangen der Transaktionsnummer mittels der Anwendung identifizieren muss.

Die Identifizierung könnte mittels eines individuellen Merkmals des Nutzers erfolgen. Ein solches individuelles Merkmal könnte eine anwendungsspezifische PIN oder ein biometrisches Merkmal sein. Das individuelle Merkmal könnte zudem in der Transaktionseinheit hinterlegt sein, so dass die Transaktionsnummer mit dem individuellen Merkmal mittels der Anwendung verknüpft werden könnte und beide zusammen an die Transaktionseinheit übermittelt werden könnten. In diesem Fall könnte die Transaktionseinheit den Nutzer des Kommunikationsendgerätes anhand des individuellen Merkmals identifizieren. Das individuelle Merkmal müsste somit nicht auf dem Kommunikationsendgerät gespeichert werden, so dass eine Manipulation erschwert wäre.

Das individuelle Merkmal könnte zudem auch zur Verschlüsselung der Transaktionsnummer verwendet werden, so dass die Transaktionseinheit die Transaktionsnummer mittels des hinterlegten individuellen Merkmals entschlüsseln kann. Vorzugsweise wäre das individuelle Merkmal auch in diesem Fall nicht im Kommunikationsendgerät selbst gespeichert. Das Kommunikationsendgerät würde den Nutzer nur auffordern ein nicht näher spezifiziertes individuelles Merkmal einzugeben. Nur der Nutzer wüsste welcher Art das individuelle Merkmal ist.

Die Verschlüsselung durch das Kommunikationsendgerät könnte z.B. derart ausgeführt werden, dass ein biometrisches Merkmal und die TAN in Zahlen umgewandelt werden und durch eine mathematische Operation verknüpft werden. Die Transaktionseinheit könnte aufgrund des bekannten biometrischen Merkmals und der bekannten mathematischen Operation die TAN bestimmen.

Nach der Authentifizierung der Transaktion durch die Transaktionseinheit würde die Transaktionseinheit die Transaktion schließlich durchführen.

Es ist eine weitere Aufgabe der vorliegenden Erfindung, ein Kommunikationsendgerät zur Verfügung zu stellen, das angepasst ist die für das Kommunikationsendgerät relevanten Schritte des zuvor beschriebenen Verfahrens zur Autorisierung von Transaktionen durchzuführen.

Diese Aufgabe wird durch ein Kommunikationsendgerät gelöst, das eingerichtet ist, eine Kurznachricht mit einem Schlüssel zu empfangen, nach Erhalt der Kurznachricht eine Anwendung zu starten, die die Eingabe einer Transaktionsnummer ermöglicht. Das Kommunikationsendgerät ist weiter dazu eingerichtet, die Transaktionsnummer mit dem Schlüssel zu verschlüsseln und die verschlüsselte Transaktionsnummer per Kurznachricht zu versenden. Der Schlüssel ist vorzugsweise ein öffentlicher Schlüssel der von einer Transaktionseinheit zur Verfügung gestellt wird, die mittels der Kurznachricht eine Transaktionsanfrage zur Authentifizierung einer Transaktion übermittelt.

Es ist eine weitere Aufgabe der vorliegenden Erfindung, ein System zur Verfügung zu stellen, das angepasst ist die Schritte des zuvor beschriebenen Verfahrens zur Autorisierung von Transaktionen durchzuführen.

Diese Aufgabe wird insbesondere durch ein System oder Transaktionssystem umfassend einen Transaktionsterminal, ein Kommunikationsendgerät eines Nutzers, eine Transaktionseinheit, einen ersten gesicherten Kommunikationskanal und einen zweiten Kommunikationskanal, wobei der zweite Kommunikationskanal verschieden vom ersten Kommunikationskanal ist, gelöst. Die Transaktionseinheit ist dabei dazu eingerichtet, eine eindeutige Transaktionsnummer als Reaktion auf eine mittels des Transaktionsterminals initiierte Transaktionsanfrage des Nutzers zu erzeugen und mittels des ersten gesicherten Kommunikationskanals an den Transaktionsterminal zu übermitteln. Die Transaktionseinheit ist weiter eingerichtet eine Authentifizierungsanfrage zum Kommunikationsendgerät mittels des zweiten Kommunikationskanals zu übermitteln, wobei die Übermittlung der Authentifizierungsanfrage den Empfang einer Kurznachricht durch das Kommunikationsendgerät umfasst. Das Kommunikationsendgerät ist nach Empfang der Kurznachricht eingerichtet, eine Anwendung zum Empfangen der Transaktionsnummer aufzurufen und die Transaktionsnummer an die Transaktionseinheit zu übermitteln. Dies kann vorzugsweise ebenfalls mittels einer Kurznachricht erfolgen. Die Transaktionseinheit ist weiter dazu eingerichtet, die Transaktion mittels eines Vergleichs der an den Transaktionsterminal übermittelten Transaktionsnummer mit der vom Kommunikationsendgerät empfangenen Transaktionsnummer zu authentifizieren.

Die Transaktionseinheit des Systems ist weiter dazu eingerichtet, mit der Transaktionsanfrage einen Schlüssel zu übermitteln. Das Kommunikationsendgerät ist weiter dazu eingerichtet, die Transaktionsnummer mit dem Schlüssel zu verschlüsseln und die verschlüsselte Transaktionsnummer an die Transaktionseinheit z.B. per Kurznachricht zu versenden. Der Schlüssel ist vorzugsweise ein öffentlicher Schlüssel der von einer Transaktionseinheit zur Verfügung gestellt wird, die mittels der Kurznachricht eine Authentifizierungsanfrage zur Authentifizierung einer Transaktion übermittelt.

Das Kommunikationsendgerät des Anspruchs 12 hat, sofern die Verfahrensschritte auf dem Kommunikationsendgerät ausgeführt werden, die gleichen oder vergleichbare Ausführungsformen wie der Verfahren gemäß Anspruch 1, insbesondere wie in den abhängigen Ansprüchen beschrieben.

Das System des Anspruchs 13 hat die gleichen oder vergleichbare Ausführungsformen wie das Verfahren gemäß Anspruch 1, insbesondere wie in den abhängigen Ansprüchen beschrieben.

Die Erfindung bezieht sich zudem auf ein oder mehrere Computer Programmprodukte. Die Computer Programmprodukte umfassen Code-Mittel die auf einem oder mehreren Speichern des Systems, des Kommunikationsendgerätes, des Transaktionsterminal und/oder der Transaktionseinheit gespeichert sind. Die Code-Mittel sind dabei derart ausgestaltet, dass die Verfahrensschritte der Ansprüche 1 - 11 auf dem System oder die zum Kommunikationsendgerät, Transaktionsterminal oder der Transaktionseinheit gehörigen Verfahrensschritte der Ansprüche 1 - 11 auf dem Kommunikationsendgerät, dem Transaktionsterminal oder der Transaktionseinheit ausgeführt werden können.

### Kurze Beschreibung der Abbildungen

Diese und andere Aspekte der Erfindung werden im Detail in den Abbildungen wie folgt gezeigt.
Fig. 1 zeigt eine schematische Darstellung eines Transaktionssystems
Fig. 2 zeigt eine schematische Darstellung der Abwicklung einer Transaktionsanfrage
Fig. 3 zeigt eine schematische Darstellung der Verfahrensschritte bei einer Transaktionsanfrage

### Detaillierte Beschreibung der Ausführungsbeispiele

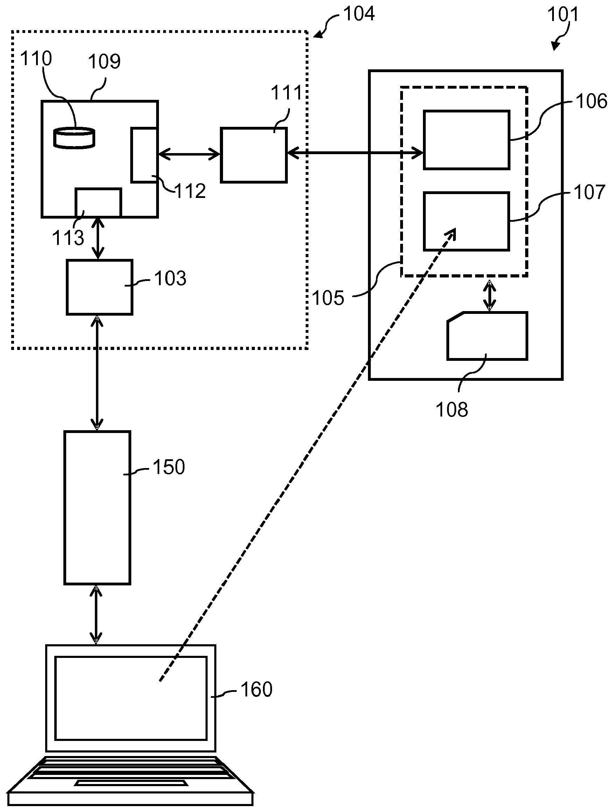

Die Fig. 1 zeigt schematisch ein System, in dem mittels eines Kommunikationsendgeräts 101 eines Nutzers auf Authentifizierungsanfragen geantwortet werden kann, die von einer Transaktionseinheit 150 nach einer Transaktionsanfrage durch einen Transaktionsterminal160 veranlasst wird. Bei der im Folgenden dargestellten Ausführungsform interagiert die Transaktionseinheit 150 mit dem Nutzer des Kommunikationsendgeräts 101 der zugleich Nutzer des Transaktionsterminals 160 ist.

Auf die Transaktionseinheit 150 kann der Nutzer mittels eines Webbrowser zugreifen der auf dem Transaktionsterminals 160 läuft. Der Nutzer kann direkt über entsprechende Ein- und Ausgabemittel des Transaktionsterminals 160 mit der Transaktionseinheit 150 interagieren und z.B. nach erfolgter Identifizierung eine Banktransaktion starten. Der Webbrowser ermöglicht bevorzugt eine geschützte Kommunikation zwischen dem Transaktionsterminal 160 und der Transaktionseinheit 150. Der Transaktionsterminal 160 ist im dargestellten Fall ein mobiler PC des Nutzers. Die Transaktionseinheit 150 ist ein Server eines Banksystems. Das Kommunikationsendgerät 101 ist in diesem Fall ein mobiles Endgerät, das eingerichtet ist Authentifizierungsanfragen der Transaktionseinheit 150 zu beantworten.

Die Abwicklung der Authentifizierungsanfragen wird von einer Dateneinrichtung 103 gesteuert, die bei der Ausgestaltung, die in der Fig. 1 dargestellt ist, als eine von der Transaktionseinheit 150 getrennte, separate Servereinrichtung ausgeführt ist. Die Dateneinrichtung 103 ist im vorliegenden Fall ein entsprechend eingerichtetes Backend System eines Kommunikationsdienstleisters. Wenn eine Authentifizierungsanfrage an das Kommunikationsendgerät 101 gesendet werden soll, übermittelt die Transaktionseinheit 150 eine entsprechende Anweisung an die Dateneinrichtung 103, und die von dem Kommunikationsendgerät 101 erhaltene Antwort auf die Authentifizierungsanfrage wird von der Dateneinrichtung 103 an die Transaktionseinheit 150 gemeldet. Die Kommunikationsverbindung zwischen der Transaktionseinheit 150 und der Dateneinrichtung 103 kann über ein Datennetz hergestellt werden, wobei die Kommunikation gegen unberechtigte Manipulationen und das Abhören von Daten gesichert wird.

Das Kommunikationsendgerät 101 des Nutzers ist bei der in der Fig. 1 dargestellten Ausgestaltung als mobiles Kommunikationsendgerät 101, wie etwa ein Mobiltelefon, ein Smartphone, ein Tablet- oder Notebookcomputer oder dergleichen, ausgestaltet, das sich über ein in der Figur nicht dargestelltes Zugangsnetz drahtlos mit einem Mobilfunknetz 104 verbinden kann, um von dem Mobilfunknetz 104 bereitgestellte Mobilfunkdienste, wie beispielsweise Dienste zur Sprach-, Daten- und Nachrichtenübermittlung zu nutzen. Beispiele für Dienste, die über das Mobilfunknetz 104 bereitgestellt werden können und zu deren Nutzung das Kommunikationsendgerät 101 verwendet werden kann, sind Dienste für Sprach- oder Videoanrufe, Datendienste bzw. Dienste für den Zugriff auf Datennetze, wie das Internet, sowie Nachrichtendienste, wie etwa SMS, MMS (Multimedia Messaging Service) oder E-Mail.

In der Ausgestaltung als mobilfunkfähiges Gerät umfasst das Kommunikationsendgerät 101 ein Terminal 105, das ein Funkmodul 106 aufweist, mit dem das Kommunikationsendgerät 101 über das Funkzugangsnetz mit dem Mobilfunknetz 104 verbunden werden kann. Das Funkmodul 106 verfügt hierzu über die erforderliche Funktechnik, beispielsweise eine Antenne mit zugehörigen Peripheriekomponenten, und über eine Steuereinrichtung zur Steuerung des Funkmoduls 106 und zur Durchführung der für den Datenaustausch mit dem Mobilfunknetz 104 bzw. dem Funkzugangsnetz notwendigen Datenverarbeitung. Neben dem Funkmodul 106 umfasst das Terminal 105 eine Benutzerschnittstelle 107, die Einrichtungen zur Interaktion zwischen dem Kommunikationsendgerät 101 und dem Nutzer umfasst. Insbesondere kann die Benutzerschnittstelle 107 eine als Display ausgestaltete visuelle Ausgabeeinrichtung sowie eine oder mehrere Eingabeeinrichtungen, wie beispielsweise eine Tastatur und/oder einen Joy-stick. Das Display kann auch als ein so genannter Touchscreen ausgestaltet sein und damit sowohl als visuelle Ausgabeeinrichtung als auch als Eingabeeinrichtung dienen. Zudem kann die Benutzerschnittstelle 107 weitere Ein- und Ausgabemittel bereitstellen, etwa für die Ein- und/oder Ausgabe von Audiosignalen. Neben dem Funkmodul 106 und der Benutzerschnittstelle 107 weist das Terminal 105 weitere in der Figur nicht dargestellte Komponenten auf, wie beispielsweise einen oder mehrere Prozessoren zur Steuerung des Terminals 105 und zur Ausführung weiterer von dem Bediener verwendeter Programme, eine oder mehrere Speichereinheiten zur Speicherung von Daten und Programmen, und ggf. weitere Hard- und Softwarekomponenten zur Ausführung von in dem Terminal 105 bereitgestellter Funktionen.

Das Funkmodul 106 kann mit einem in das Terminal eingesetzten Identifizierungsmodul 108 des Kommunikationsendgeräts 101 verbunden werden, welches Daten und Prozesse bereitstellt, die für den Zugriff des Kommunikationsendgeräts 101 auf das Mobilfunknetz 104 benötigt werden. Unter anderem werden von dem Identifizierungsmodul 108 bereitgestellte Daten und Prozesse für die Teilnehmeridentifizierung und -authentisierung in dem Mobilfunknetz 104 herangezogen. Die Teilnehmeridentifizierung und - authentisierung wird üblicherweise bei der Einbuchung in das Mobilfunknetz 104 vorgenommen und umfasst die Identifizierung des Identifizierungsmoduls 108 anhand einer Kennung, die von dem Identifizierungsmodul 108 an das Mobilfunknetz 104 gesendet wird, sowie die Authentisierung des Identifizierungsmoduls 108 anhand von Informationen, die in dem Identifizierungsmodul 108 unter Einsatz von vorgegebenen Algorithmen und Informationen berechnet werden. Das Identifizierungsmodul 108 verfügt über eine spezielle Sicherheitsarchitektur, die einen unautorisierten Zugriff auf Daten und Prozesse, insbesondere auf die zuvor genannten, für den Zugriff auf das Mobilfunknetz 104 verwendeten Daten und Prozesse, verhindert.

Das Identifizierungsmodul 108 ist in einer Ausgestaltung ein gesicherter Chip, der in einer Chipkarte enthalten ist, welche lösbar in einen Kartenleser des Terminals 105 eingesteckt werden kann. In dieser Ausgestaltung kann es sich bei dem Identifizierungsmodul 108 um eine SIM- oder USIM-Karte handeln, die für den Zugriff auf ein Mobilfunknetz 104 verwendet wird, das als GSM-, UMTS- oder LTE (Long Term Evolution)-Netz ausgeführt ist. Gleichfalls kann das Identifizierungsmodul 108 jedoch auch ein Chip sein, der fest in das Kommunikationsendgerät 101 integriert ist. Der Chip kann insbesondere auch als SIM- oder USIM-Chip ausgestaltet sein. In einer weiteren Ausgestaltung ist das Identifizierungsmodul 108 ein gesichertes Softwaremodul, das auf einem Prozessor des Terminals 105 ausgeführt wird, der auch für andere Aufgabe eingesetzt wird und bei dem es sich beispielsweise um den Hauptprozessor des Kommunikationsendgeräts 101 handeln kann.

Das Identifizierungsmodul 108 ist in einem Mobilfunknetz 104 registriert, das auch als das Heimatnetz des Identifizierungsmoduls 108 bzw. des Nutzers des Kommunikationsendgeräts 101 bezeichnet wird und welches in der Fig. 1 dargestellt ist. Bei dem Heimatnetz 104 kann es sich um das Mobilfunknetz handeln, mit dessen Betreiber der Nutzer einen Mobilfunkvertrag geschlossen hat. Von dem Betreiber des Heimatnetzes 104 oder in dessen Auftrag wird das Identifizierungsmodul 108 an den Nutzer ausgegeben und zuvor in einem sicheren Prozess vorkonfiguriert. Hierbei werden von dem Betreiber des Heimatnetzes 104 vorgegebene Daten zur Identifizierung und Authentisierung des Identifizierungsmoduls 108, von dem Betreiber vorgegebene Prozesse, wie beispielsweise bei der Authentisierung eingesetzte Verschlüsselungsalgorithmen, und weitere vom Betreiber vorgegebene Daten in dem Identifizierungsmodul 108 installiert.

Nach der Ausgabe kann in einer Ausgestaltung per Fernzugriff auf die in dem Mobilfunknetz 104 registrierten Identifizierungsmodule 108 zugegriffen werden, um Anpassungen vorzunehmen. Beispielsweise können Daten und Prozesse bzw. Programme in dem Identifizierungsmodul 108 verändert, ergänzt oder gelöscht werden. Mittels des Fernzugriffs können derartige Anpassungen vorgenommen werden, ohne dass Identifizierungsmodule in einer Servicestelle des Mobilfunkbetreibers oder eines anderen An-bieters angepasst oder neu ausgegeben werden müssen. Für den Fernzugriff auf ein Identifizierungsmodul 108 kann ein OTA-Mechanismus eingesetzt werden, bei dem ein OTA-Server 109 eine Nachricht an das betreffende Identifizierungsmodul 108 sendet, die Daten zur Installation in den Identifizierungsmodul 108 und/oder Befehle zur Änderung von Daten oder zur Ausführung von Prozesse und Programmen in dem Identifizierungsmodul 108 enthalten sein können. Der OTA-Server 109 kann in dem Mobilfunknetz 104 angeordnet sein und beispielsweise von dem zugehörigen Mobilfunkanbieter betrieben werden, oder er kann außerhalb des Mobilfunknetzes 104 von einer vertrauenswürdigen Organisation betrieben werden.

Zur Sicherung des Fernzugriffs auf die Identifizierungsmodule 108 und vor allem zum Schutz vor unberechtigten Zugriffen auf die Identifizierungsmodule 108 werden kryptographische Mechanismen eingesetzt. Die von dem OTA-Server 109 an ein Identifizierungsmodul 108 gesendeten Nachrichten, die im Folgenden auch als OTA-Nachrichten bezeichnet werden, sind mit einem kryptographischen Schlüssel verschlüsselt, um sie vor unberechtigten Manipulation auf dem Transportweg zu schützen und zu verhindern, dass Unbefugte OTA-Nachrichten an ein Identifizierungsmodul 108 senden können. Der Schlüssel ist dem jeweiligen Identifizierungsmodul 108 eindeutig zugeordnet und unter einer Kennung des Identifizierungsmoduls 108 in einer Datenbank 110 des OTA-Servers 109 hinterlegt. In dem Identifizierungsmodul 108 werden empfangene OTA-Nachrichten mit einem entsprechen kryptographischen Schlüssel entschlüsselt. Mit der Entschlüsselung wird zudem auch die Authentizität der Nachricht geprüft, da die Nachricht nur dann erfolgreich entschlüsselt werden kann, wenn sie mit dem korrekten, nur im OTA-Server 109 hinterlegten Schlüssel verschlüsselt worden ist.

Der in dem OTA-Server 109 zur Verschlüsselung verwendete Schlüssel und der in dem Identifizierungsmodul 108 zur Entschlüsselung verwendete Schlüssel, die nachfolgend auch als OTA-Schlüssel bezeichnet werden, können ein symmetrisches Schlüsselpaar bilden. Gleichfalls kann jedoch auch die Verwendung von asymmetrischen Schlüsselpaaren vorgesehen sein. Der in dem Identifizierungsmodul 108 verwendete OTA-Schlüssel kann bei der zuvor beschriebenen Vorkonfigurierung des Identifizierungsmoduls 108 in diesem hinterlegt werden. Die Kennung, unter der die den Identifizierungsmodulen 108 zugeordnete kryptographischen Schlüssel jeweils in der Datenbank 110 des OTA-Servers 109 hinterlegt sind, kann eine als MSISDN ausgestaltete, dem Identifizierungsmodul 108 zugeordnete Rufnummer umfassen, die auch zur Adressierung der OTA-Nachrichten an das Identifizierungsmodul 108 herangezogen werden kann. Zusätzlich oder alternativ kann die Kennung auch andere dem Identifizierungsmodul 108 zugeordneten Identifizierungscodes umfassen. Sofern dabei die Rufnummer nicht in der Kennung enthalten ist, ist die Rufnummer vorzugsweise im OTA-Server 109 hinterlegt, und wird von dem OTA-Server 109 zur Adressierung von Nachrichten an das Identifizierungsmodul 108 verwendet. Alternativ wird die Rufnummer in diesem Fall an den OTA-Server 109 übergeben, wenn dieser angewiesen wird, eine OTA-Nachricht an ein Identifizierungsmodul 108 zu senden.

Die OTA-Nachrichten werden über einen in dem Mobilfunknetz 104 bereitgestellten Datenübertragungsdienst übertragen. Insbesondere kann ein Kurznachrichtendienst verwendet werden, bei dem es sich in einer Ausgestaltung um den an sich bekannten SMS (Short Message Service) handelt. Bei dem SMS werden Kurznachrichten von einem SMSC (Short Message Service Center) 111 des Mobilfunknetzes 104 an die mit dem Mobilfunknetz 104 verbundenen Kommunikationsendgeräte 101 gesendet. Zur Übertragung von OTA-Nachrichten besitzt der OTA-Server 109 daher eine SMS-Schnittstelle 112, über die er mit dem SMSC 111 verbunden ist. Um eine OTA-Nachricht an ein Identifizierungsmodul 108 zu übertragen, übergibt der OTA-Server 109 über die SMS-Schnittstelle 112 den verschlüsselten Inhalt der OTA-Nachricht zusammen mit der dem Identifizierungsmodul 108 zugeordneten Rufnummer an das SMSC 111. Das SMSC 111 sendet daraufhin eine als SMS-Nachricht ausgestaltete OTA-Nachricht unter Verwendung der dem Identifizierungsmodul 108 zugeordneten Rufnummer an das betreffende Kommunikationsendgerät 101. Dies geschieht grundsätzlich in der gleichen Weise wie die Übermittlung anderer SMS-Nachrichten an das Kommunikationsendgerät 101. Die OTA-Nachricht wird jedoch aufgrund eines enthaltenen besonderen Kennzeichens von dem Terminal 105 an das Identifizierungsmodul 108 weitergeleitet. Dies geschieht vorzugsweise transparent, d.h. unsichtbar für Nutzer des Kommunikationsendgeräts 101. In dem Identifizierungsmodul 108 wird die Nachricht nach dem Empfang zunächst entschlüsselt und dabei, wie zuvor erläutert, authentisiert. Nach erfolgreicher Entschlüsselung, wird die Nachricht ausgewertet, und darin enthaltene Steuerbefehle werden ausgeführt.

Authentisierungsanfragen, die in dem in der Fig. 1 dargestellten System von der Transaktionseinheit 150 veranlasst werden und von der Dateneinrichtung 103 an das Kommunikationsendgerät 101 gesendet werden, werden in dem Kommunikationsendgerät 101 von einer Softwareanwendung bearbeitet, die in einer Ausgestaltung in dem Identifizierungsmodul 108 des Kommunikationsendgeräts gespeichert ist und ausgeführt wird. Hierdurch wird die Anwendung von den Sicherheitsmechanismen des Identifizierungsmoduls 108 gegen unberechtigte Zugriffe geschützt. Die Anwendung kann vor der Ausgabe des Identifizierungsmoduls 108 bei der zuvor erläuterten Vorkonfiguration in dem Identifizierungsmodul 108 installiert werden. Gleichfalls ist eine nachträgliche Installation möglich, die beispielsweise über den Fernzugriff mittels des OTA-Mechanismus vorgenommen werden kann.

Die Authentifizierungsanfragen werden in verschlüsselten Nachrichten an das Identifizierungsmodul 108 übermittelt. Für die verschlüsselte Übermittlung der Nachrichten mit den Anfragen wird bei dem in der Fig. 1 gezeigten Ausgestaltung des Systems der zuvor beschriebene OTA-Mechanismus eingesetzt. Hierdurch kann ein bereits bestehender und in Identifizierungsmodulen 108 standardmäßig implementierter Mechanismus für die sichere Übermittlung der Nachrichten mit den Authentifizierungsanfragen genutzt werden. Es muss zu diesem Zweck kein neuer Sicherheitsmechanismus in den Identifizierungsmodulen 108 eingerichtet werden.

Eine Authentisierungsanfrage wird daher in einer OTA-Nachricht in der zuvor beschriebenen Weise von dem OTA-Server 109 an ein Identifizierungsmodul 108 gesendet. Zu diesem Zweck wird die Authentisierungsanfrage der Transaktionseinheit 150 von der Dateneinrichtung 103 zunächst über eine entsprechende Schnittstelle 113 des OTA-Servers 109 an diesen übergeben. Die Kommunikation zwischen dem OTA-Server 109 und der Dateneinrichtung 103 über die Schnittstelle 113 ist gegen unberechtigte Manipulation von Daten und das Abhören auf dem Transportweg gesichert. Neben dem Inhalt der Authentisierungsanfrage übergibt die Dateneinrichtung 103 an den OTA-Server 109 die Kennung des Identifizierungsmoduls 108, an welches die Authentisierungsanfrage gesendet werden soll.

Die Kennung wird in einer Ausgestaltung von der Transaktionseinheit 150 an die Dateneinrichtung 103 übergeben und kann von dem Nutzer des Kommunikationsendgeräts 101 im Rahmen der Interaktion mit der Transaktionseinheit 150 angegeben werden. Alternativ kann von der Transaktionseinheit 150 auch eine weitere dem Nutzer zugeordnete Kennung an die Dateneinrichtung 103 übergeben werden, anhand derer die Dateneinrichtung 103 die Kennung des an den Nutzer ausgegebenen Identifizierungsmoduls 108 ermitteln kann. Hierzu kann die Dateneinrichtung 103 auf eine Datenbank zugreifen, in der für eine Mehrzahl von Nutzern Zuordnungen zwischen Nutzerkennungen und Kennungen von zugehörigen Identifizierungsmodulen hinterlegt sind. Die Kennung kann z.B. die einer SIM-, USIM-Karte oder Ähnlichem zugeordnete MSISDN sein.

Nach dem Erhalt des Inhalts der Authentisierungsanfrage und dem Erhalt bzw. der Ermittlung der Kennung des betreffenden Identifizierungsmoduls 108 ermittelt der OTA-Server 109 den in der Datenbank 110 gespeicherten OTA-Schlüssel des Identifizierungsmoduls 108 und erzeugt eine mit diesem Schlüssel verschlüsselte OTA-Nachricht. Die OTA-Nachricht wird in der zuvor beschriebenen Weise an das SMSC 111 übergeben, und von diesem wird die OTA-Nachricht an das Kommunikationsendgerät 101 gesendet und innerhalb des Kommunikationsendgeräts 101 an das Identifizierungsmodul 108 weitergeleitet.

Innerhalb des Identifizierungsmoduls 108 wird anhand eines in der Nachricht enthaltenen Kennzeichens erkannt, dass es sich um eine zu bearbeitende Authentisierungsanfrage handelt. Daraufhin wird die zuvor beschriebene, zur Bearbeitung der Authentisierungsanfragen vorgesehene Anwendung des Identifizierungsmoduls 108 gestartet. Diese greift auf die Benutzerschnittstelle 107 des Terminals 105 zu und veranlasst die Präsentation des Inhalts der Authentisierungsanfrage an der visuellen Ausgabeeinrichtung der Benutzerschnittstelle 107. Die Anwendung ist nun dazu eingerichtet eine TAN die dem Nutzer in Reaktion auf die Transaktionsanfrage von der Transaktionseinheit 150 mittels des Transaktionsterminals 160 übermittelt worden ist, z.B. manuell über die Benutzerschnittstelle 107 zu empfangen. Die Weitergabe oder Eingabe der TAN durch den Nutzer ist in Fig. 1 durch den gestrichelten Pfeil vom Transaktionsterminal 160 zum Kommunikationsendgerät 101 dargestellt.

Die Antwortmitteilung wird in dem Identifizierungsmodul 108 von der zur Bearbeitung der Authentisierungsanfrage vorgesehene Anwendung erzeugt und zur Übermittlung an die Dateneinrichtung 103 an das Terminal 105 übergeben.

Vom Terminal 105 wird die Antwortmitteilung dann an die Dateneinrichtung 103 übermittelt. Hierzu können grundsätzlich beliebige Übermittlungsverfahren eingesetzt werden. In einer Ausgestaltung erfolgt die Übermittlung über das Mobilfunknetz 104 mittels eines von dem Mobilfunknetz 104 bereitgestellten Nachrichtendienstes. Hierbei kann es sich insbesondere wiederum um den SMS handeln, der auch zur Übertragung der OTA-Nachrichten an das Kommunikationsendgerät 101 eingesetzt werden kann. Bei Verwendung des SMS wird die Antwortmitteilung als SMS-Nachricht von dem Kommunikationsendgerät 101 bzw. dem Terminal 105 an das SMSC 111 gesendet. Dieses leitet die Antwortmitteilung dann an die Dateneinrichtung 103 weiter. Hierzu kann eine Verbindung zwischen dem SMSC 111 und der Dateneinrichtung 103 verwendet werden, die beispielsweise über dasselbe Datennetz hergestellt werden kann wie die Verbindung zwischen der Dateneinrichtung 103 und dem OTA-Server 109.

Sowohl für den Zugriff auf die Benutzerschnittstelle 107 als auch für die Steuerung der Übermittlung der Antwortnachricht von dem Kommunikationsendgerät 101 an die Dateneinrichtung 103 kann sich die Anwendung sogenannter proaktiver Befehle eines dem Fachmann an sich bekannten Card Application Toolkit (CAT) bedienen, die einer Chipkarte erlauben, auf eigene Initiative auf Funktionen des Terminals 105 zuzugreifen. Im Falle der Ausgestaltung des Identifizierungsmoduls 108 als SIM- oder USIM-Chip können insbesondere Befehle des SIM Application Toolkit (SAT) bzw. USIM Application Toolkit (USAT) verwendet werden.

Um sicherzustellen, dass nur Bedieneingaben zur Eingabe der TAN in Reaktion auf die Authentifizierungsanfrage berücksichtigt werden, die von dem Nutzer des Kommunikationsendgeräts 101 selbst und nicht von einem Dritten vorgenommen worden sind, wird in einer Ausgestaltung ein Authentisierungs- oder Identifizierungsmerkmal des Nutzers überprüft, bevor die Anwendung die Antwortmitteilung auf die Authentisierungsanfrage generiert und an das Terminal 105 zur Übermittlung an die Dateneinrichtung 103 übergibt. Bei dem Identifizierungsmerkmal kann es sich beispielsweise um eine PIN handeln, die der Nutzer aufgrund einer entsprechenden Aufforderung mittels einer in der Benutzerschnittstelle 107 enthaltenen Eingabeeinrichtung an dem Kommunikationsendgerät 101 eingibt. Gleichfalls können mittels geeigneter Eingabeeinrichtungen der Benutzerschnittstelle 107 ggf. auch andere Identifizierungsmerkmale, wie beispielsweise biometrische Merkmale des Nutzers, eingegeben werden. Zur Überprüfung des an dem Kommunikationsendgerät 101 eingegebenen Identifizierungsmerkmals wird dieses von der Benutzerschnittstelle 107 an das Identifizierungsmodul 108 übergeben und dort mit einem in dem Identifizierungsmodul 108 hinterlegten Referenzmerkmal verglichen. Dieses kann bereits bei der Vorkonfiguration in dem Identifizierungsmodul 108 hinterlegt werden, oder nachträglich in einem abgesicherten Prozess von dem Nutzer in dem Identifizierungsmodul 108 gespeichert werden.

Bei einer erfolgreichen Überprüfung des Identifizierungsmerkmals, das heißt bei einer hinreichenden Übereinstimmung des eingegebenen Identifizierungsmerkmals und des Referenzmerkmals, generiert die Anwendung des Identifizierungsmoduls die Antwortmitteilung, die dann an die Dateneinrichtung 103 übermittelt wird. Wird das Identifizierungsmerkmal - ggf. nach einer vorgegebenen Anzahl wiederholter Eingaben an der Benutzerschnittstelle - nicht erfolgreich überprüft, unterbleibt die Erzeugung der Antwortmitteilung. Stattdessen kann eine Fehlerroutine ausgeführt werden, die beispielsweise eine Sperrung der Anwendung oder des Identifizierungsmoduls 108 und/oder eine Meldung an die Dateneinrichtung 103 umfassen kann. Wie zuvor bereits angedeutet, kann anhand der Prüfung des Identifizierungsmerkmals die Identität des Nutzers des Kommunikationsendgeräts verifiziert werden, so dass sichergestellt ist, dass die Antwort von dem Nutzer gegeben worden ist. Wie erwähnt können somit Authentisierungsanfragen nicht nur zur Ermöglichung einer Antwort mittels des Kommunikationsendgeräts 101 sondern gleichzeitig auch zum Zwecke der Nutzeridentifizierung durchgeführt werden, die beispielsweise im Zusammenhang mit der Zugriffsfreigabe auf Funktionen, Dienste und/oder Daten durch die Transaktionseinheit 150 vorgenommen wird.

Die Überprüfung des Identifizierungsmerkmals wird in einer Ausgestaltung beim Start der für die Bearbeitung der Authentisierungsanfrage vorgesehenen Anwendung vorgenommen, der, wie zuvor beschrieben wurde, aufgrund des Empfangs der die Authentisierungsanfrage enthaltenen OTA-Nachricht erfolgt. Die Anwendung bearbeitet die Authentisierungsanfrage in dieser Ausgestaltung nur dann weiter, wenn das Identifizierungsmerkmal erfolgreich überprüft worden ist. Andernfalls wird die Bearbeitung abgebrochen, so dass auch die Abfrage der TAN im Falle einer fehlerhaften Überprüfung des Identifikationsmerkmals unterbleibt. Ergänzend kann vorgesehen sein, dass das Fehlschlagen der Überprüfung des Identifizierungsmerkmals an die Dateneinrichtung 103 gemeldet wird. Gleichfalls kann jedoch auch vorgesehen sein, dass die Prüfung des Identifikationsmerkmals zu einem anderen Zeitpunkt vorgenommen wird. Beispielsweise kann vorgesehen sein, dass der Nutzer das Identifikationsmerkmal zusammen mit der TAN eingibt. Das Identifizierungsmerkmal kann in diesem Fall mit der TAN an die Transaktionseinheit 150 übermittelt werden, so dass die Identifizierung durch die Transaktionseinheit 150 oder ein mit dieser verbunden Nebeneinheit durchgeführt wird. Das Identifizierungsmerkmal wäre in diesem Fall nicht auf dem Kommunikationsendgerät 101 gespeichert und besser gegen potentielle Manipulationen gesichert.

Die von der Anwendung generierte Antwortmitteilung wird optional nicht mit dem OTA-Schlüssel des Identifizierungsmoduls 108 verschlüsselt. In einer Ausgestaltung wird die Antwortmitteilung völlig ohne eine spezifische Verschlüsselung, d.h. eine spezielle für die Antwortnachricht vorgenommen Verschlüsselung auf dem Anwendungslevel übermittelt (standardmäßige vorgesehene Transportverschlüsselungen, wie sie beispielsweise für der Übertragung zu dem Mobilfunknetz 104 über die Luftschnittstelle vorgenommen werden können, werden selbstverständlich auch für die Antwortmitteilung durchgeführt). Der Verzicht auf die spezifische Verschlüsselung hat den Vorteil, dass in dem Identifizierungsmodul 108 oder an anderer Stelle in dem Kommunikationsendgerät 101 keine besonderen kryptographischen Operationen zur Erzeugung der Antwortmitteilung durchgeführt werden müssen. Zudem kann die Antwortmitteilung auch dann erzeugt werden, wenn die vorgesehene Implementierung des OTA-Mechanismus in dem Identifizierungsmodul 108 vorsieht, dass der OTA-Schlüssel lediglich zur Entschlüsselung empfangener OTA-Nachrichten eingesetzt werden kann und nicht zur Durchführung von Verschlüsselungen in dem Identifizierungsmodul 108.

In einer alternativen Ausgestaltung wird auf die Verschlüsselung der Antwortmitteilung hingegen nicht vollständig verzichtet, die Verschlüsselung wird jedoch vorzugsweise unabhängig von dem OTA-Mechanismus und insbesondere nicht mit dem OTA-Schlüssel des Identifizierungsmoduls 108 vorgenommen, so dass die Antwortmitteilung auch dann verschlüsselt werden kann, wenn der OTA-Schlüssel hierfür nicht genutzt werden kann. Durch eine Verschlüsselung der Antwortnachricht kann beispielsweise vorgeschriebenen Sicherheitsrichtlinien entsprochen werden, die eine Verschlüsselung vorschreiben. Die Verschlüsselung kann z.B. mittels eines öffentlichen Schlüssels erfolgen, der dem Kommunikationsendgerät zusammen mit der Authentifizierungsanfrage von der Transaktionseinheit 150 mitgeteilt wird. Die TAN würde somit auf dem Weg zwischen Nutzer und Transaktionseinheit nur verschlüsselt übertragen werden. Auch der Kommunikationsdienstleister des Nutzers wäre nicht in der Lage, die TAN zu lesen.

Ein weiterer in einer Ausgestaltung eingesetzter Sicherheitsmechanismus zum Schutz der Antwortmitteilung vor unberechtigten Manipulationen sieht vor, dass der Antwortmitteilung mit der TAN eine Gültigkeitsdauer zugeordnet wird. Hierzu erstellt das Kommunikationsendgerät 101 in einer Ausgestaltung bei Erzeugung der Antwortnachricht mit der TAN einen Zeitstempel. Die Gültigkeitsdauer, d.h. der Zeitraum zwischen der auf dem Zeitstempel angegebenen Zeit und dem Empfangszeitpunkt in der Dateneinrichtung, ist vorzugsweise als ein vorgegebener Parameter in der Dateneinrichtung 103 hinterlegt. Einerseits ist sie so bemessen, dass ausreichend Zeit für die Übermittlung der Antwortmitteilung von dem Kommunikationsendgerät 101 an die Dateneinrichtung 103 zur Verfügung steht. Anderseits wird die Gültigkeitsdauer nicht zu lange gewählt. Die Synchronisierung der Zeit zwischen dem Kommunikationsendgerät 101 und der Dateneinrichtung 103 kann dabei mittels eines Zeitsignals des Kommunikationsdienstleisters oder durch ein anderes unabhängiges Zeitsignal (z.B. GPS Zeitsignal) erfolgen. Wenn in der Dateneinrichtung 103 die Antwortmitteilung empfangen wird, dann überprüft die Dateneinrichtung, ob die Gültigkeitsdauer der Antwortmitteilung abgelaufen ist oder nicht. Beim Empfang der Antwortmitteilung vergleicht die Dateneinrichtung 103 die Zeit des Empfangs mit dem Zeitstempel, um zu prüfen, ob die Antwortmitteilung innerhalb der Gültigkeitsdauer empfangen worden ist. Ist dies der Fall, wird die Antwortmitteilung weiter bearbeitet. Insbesondere wird die erhaltene Antwort an die Transaktionseinheit 150 übermittelt. Wird hingegen festgestellt, dass die Gültigkeitsdauer abgelaufen ist, wird die Antwort als ungültig erkannt und eine Fehlerroutine gestartet. Hierbei kann beispielsweise ein Fehler an die Transaktionseinheit 150 gemeldet werden. Die Überprüfung des Zeitstempels kann alternativ auch durch die Transaktionseinheit 150 durchgeführt werden.

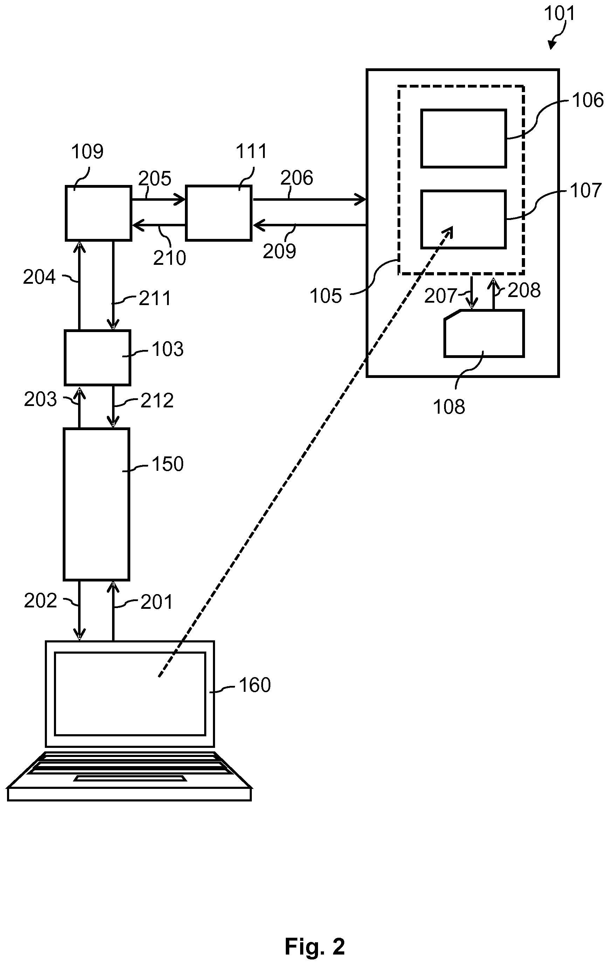

Unter Anwendung der zuvor beschriebenen Mechanismen und Einrichtungen können Authentisierungsanfragen in einer beispielhaften Ausgestaltung derart an das Kommunikationsendgerät 101 gesendet und mittels des Kommunikationsendgeräts 101 beantwortet werden, wie im Folgenden unter Bezugnahme auf das schematische Diagramm in der Fig. 2 dargestellt ist, in der verschiedene Schritte zur Abwicklung einer Authentisierungsanfrage dargestellt sind.

Zunächst wird eine Transaktionsanfrage 201 vom Transaktionsterminal 160 an die Transaktionseinheit 150 übermittelt. Als Reaktion auf die Transaktionsanfrage wird in Schritt 202 die TAN von der Transaktionseinheit 150 an den Transaktionsterminal 160 übermittelt und dort z.B. visuell für den Nutzer des Transaktionsterminals 160 dargestellt. Eine Authentisierungsanfrage wird in Reaktion auf die Transaktionsanfrage 201 in dem Schritt 203 von der Transaktionseinheit 150 an die Dateneinrichtung 103 gesendet. Die Authentisierungsanfrage umfasst in diesem Fall zusätzlich eine Beschreibung der durchzuführenden Transaktion. Zusätzlich wird die Kennung des von dem Nutzer in dem Kommunikationsendgerät 101 verwendeten Identifizierungsmoduls 108 übergeben, oder eine weitere Kennung des Nutzers, welche die Dateneinrichtung 103 in der zuvor beschriebenen Weise der Kennung des an den Nutzer ausgegebenen Identifizierungsmoduls 108 zuordnet.

Nach dem Empfang der Authentifizierungsanfrage von dem Transaktionsterminal 150 generiert die Dateneinrichtung 103 eine Authentisierungsanfragenachricht, welche den von der Transaktionseinheit 150 übermittelten Inhalt enthält.

Die Authentisierungsanfrage wird verschlüsselt an das Kommunikationsendgerät 101 des Nutzers gesendet, welches anhand der dem Identifizierungsmodul 108 zugeordneten Kennung identifiziert wird. Bei der in der Fig. 2 dargestellten Ausgestaltung wird die Authentisierungsanfrage hierzu zusammen mit der Kennung des Identifizierungsmoduls 108 in Schritt 204 an den OTA-Server 109 übergeben. Dieser ermittelt zunächst anhand der Kennung den in der Datenbank 110 (siehe Figur 1) gespeicherten OTA-Schlüssel des Identifizierungsmoduls 108 und erzeugt eine OTA-Nachricht, welche die von der Dateneinrichtung 103 erhaltene Authentisierungsanfragenachricht enthält und mit dem OTA-Schlüssel des Identifizierungsmoduls 108 verschlüsselt ist. Die OTA-Nachricht wird sodann an das Kommunikationsendgerät 101 übermittelt. Dies geschieht bei den in der Fig. 2 dargestellten und zuvor beschriebenen Ausgestaltungen mittels des SMSC 111, indem die OTA-Nachricht zunächst in dem Schritt 205 an das SMSC 111 übergeben und von diesem in dem Schritt 206 an das Kommunikationsendgerät 101 gesendet wird.

In dem Kommunikationsendgerät 101 wird die Nachricht in dem Schritt 207 an das Identifizierungsmodul 108 übergeben, welches die OTA-Nachricht mit dem in dem Identifizierungsmodul 108 hinterlegten OTA-Schlüssel entschlüsselt und nach der Entschlüsselung weiter verarbeitet. Hierbei erkennt das Identifizierungsmodul 108 die Authentisierungsanfrage und startet die Anwendung zur Bearbeitung der Authentisierungsanfrage und zur Erzeugung einer Antwortmitteilung. Die Anwendung fordert den Nutzer des Kommunikationsendgeräts 101 auf, die TAN einzugeben. Die Aufforderung beinhaltet die Abfrage einer PIN zur Identifizierung des Nutzers und wird an der Benutzerschnittstelle 107 des Kommunikationsendgeräts 101 dargestellt.

Nach Eingabe der PIN wird diese von der Anwendung überprüft, und nach erfolgreicher Überprüfung wird der Nutzer mittels der visuellen Ausgabeeinrichtung der Benutzerschnittstelle 107 aufgefordert, die mittels des Transaktionsterminals 160 dem Nutzer präsentierte TAN einzugeben. Die Anwendung erzeugt eine Antwortmitteilung mit der TAN an die Dateneinrichtung 103, die mit dem OTA Schlüssel verschlüsselt ist.

Die Antwortmitteilung wird von dem Identifizierungsmodul 108 im Schritt 208 an das Terminal 105 des Kommunikationsendgeräts 101 übergeben und dann von dem Kommunikationsendgerät 101 an die Dateneinrichtung 103 übermittelt. Dies geschieht bei der in der Fig. 2 dargestellten Ausgestaltung mittels SMS, indem die Antwortmitteilung wie zuvor bereits beschrieben zunächst als SMS-Nachricht im Schritt 209 an das SMSC 111 gesendet und von diesem im Schritt 210 an den OTA-Server übergeben wird. Im OTA-Server wird die Antwortmitteilung entschlüsselt und in Schritt 211 an die Dateneinrichtung 103 übergeben.

Die Dateneinrichtung 103 übermittelt die TAN in Schritt 215 an die Transaktionseinheit 150. Die Dateneinrichtung 103 nimmt hier eine Mittlerfunktion zwischen der Transaktionseinheit 150 und dem Mobilfunknetz 104 ein.

Die Transaktionseinheit 150 vergleicht die an den Transaktionsterminal 160 übermittelte TAN mit der vom Kommunikationsendgerät 101 empfangenen TAN. Die Transaktionseinheit 150 führt sodann nach erfolgreicher Verifizierung der TAN die Transaktion durch. Die Durchführung der Transaktion wird unterlassen, wenn die an den Transaktionsterminal 160 übermittelte TAN nicht mit der vom Kommunikationsendgerät 101 empfangenen TAN übereinstimmt.

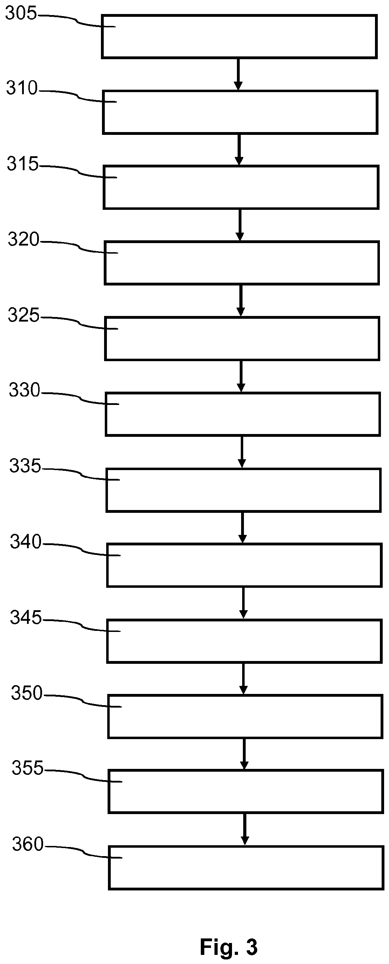

In Fig. 3 ist eine kompakte und schematische Darstellung einer Ausführungsform des Verfahrens dargestellt. In Schritt 305 wird die Transaktion durch ein Smartphone initiiert. In Schritt 310 wird die TAN durch die Transaktionseinheit 150 erzeugt und an das Smartphone übermittelt. In Schritt 315 wird die Authentifizierungsanfrage gestartet und dieser ein öffentlicher Schlüssel der Transaktionseinheit 150 zugeordnet. In Schritt 320 wird die Authentifizierungsanfrage zusammen mit dem öffentlichen Schlüssel an das Smartphone weitergeleitet und dort im Schritt 325 empfangen. Das Smartphone ist in diesem Kommunikationsendgerät 101 und Transaktionsterminal 160. In Schritt 330 wird die Anwendung gestartet. Die Anwendung fragt in Schritt 335 eine PIN des Nutzers ab. Der Nutzer wird in Schritt 340 identifiziert und die Authentifizierungsanfrage gestartet. Der Nutzer kopiert die von der Transaktionseinheit 150 empfangene TAN und fügt diese in Schritt 345 in das entsprechende Eingabefeld der Anwendung ein. In Schritt 350 wird die TAN durch das Smartphone mittels des öffentlichen Schlüssels der Transaktionseinheit 150 verschlüsselt, der zusammen mit der Authentifizierungsanfrage übermittelt wurde. Die verschlüsselte TAN wird schließlich in Schritt 355 an die Transaktionseinheit 150 übermittelt und dort mit dem privatem Schlüssel der Transaktionseinheit 150 entschlüsselt. Die Transaktionseinheit 150 verifiziert die TAN in Schritt 360 und führt die Transaktion durch.

Obwohl die Erfindung in den Zeichnungen und der vorausgegangenen Darstellung im Detail beschrieben wurde, sind die Darstellungen illustrativ und beispielhaft und nicht einschränkend zu verstehen. Die Erfindung ist nicht auf die erläuterten Ausführungsbeispiele beschränkt.

Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Liste der Bezugszeichen

- 101: Kommunikationsendgerät
- 103: Dateneinrichtung
- 104: Mobilfunknetz/Heimatnetz
- 105: Terminal
- 106: Funkmodul
- 107: Benutzerschnittstelle
- 108: Identifizierungsmodul
- 109: OTA-Server
- 110: Datenbank
- 111: SMSC
- 112: SMS-Schnittstelle
- 113: Schnittstelle
- 150: Transaktionseinheit
- 160: Transaktionsterminal
- 201: Transaktionsanfrage
- 202: TAN übermitteln
- 203: Authentifizierungsanfrage an Dateneinrichtung übergeben
- 204: Authentifizierungsanfrage an OTA-Server übergeben
- 205: Verschlüsselte Authentifizierungsanfrage an SMSC übergeben
- 206: Übermittlung SMS mit Authentifizierungsanfrage
- 207: Übergabe der Authentifizierungsanfrage an Identifizierungsmodul
- 208: Aufforderung des Nutzers zur Eingabe der Transaktionsnummer
- 209: Übermittlung SMS mit Transaktionsnummer
- 210: Übergabe der Transaktionsnummer an OTA-Server
- 211: Übergabe der Transaktionsnummer an Dateneinrichtung
- 212: Übermittlung der Transaktionsnummer an Transaktionseinheit
- 305: Transaktion initiieren
- 310: TAN erzeugen
- 315: Authentifizierungsanfrage starten
- 320: Authentifizierungsanfrage weiterleiten
- 325: Authentifizierungsanfrage empfangen
- 330: Anwendung starten
- 335: PIN Abfrage
- 340: Identifizierung und Authentifizierungsanfrage
- 345: Eingabe der TAN
- 350: Verschlüsselung der TAN
- 355: Übermittlung der TAN
- 360: Verifizierung der TAN

## Patentansprüche

1. Ein Verfahren zur Autorisierung von Transaktionen, wobei das Verfahren die folgenden Schritte umfasst:
- Erzeugen einer eindeutigen Transaktionsnummer mittels einer Transaktionseinheit (150) als Reaktion auf eine Transaktionsanfrage eines Transaktionsterminals (160) eines Nutzers;
- Übermitteln der Transaktionsnummer von der Transaktionseinheit (150) zum Transaktionsterminal (160) mittels eines ersten gesicherten Kommunikationskanals;
- Übermitteln einer Authentifizierungsanfrage von der Transaktionseinheit (150) zu einem Kommunikationsendgerät (101) des Nutzers mittels eines zweiten Kommunikationskanals, der verschieden von dem ersten gesicherten Kommunikationskanal ist, wobei die Übermittlung der Authentifizierungsanfrage den Empfang einer Kurznachricht durch das Kommunikationsendgerät (101) umfasst, und wobei die Authentifizierungsanfrage einen öffentlichen Schlüssel enthält, mit dem das Kommunikationsendgerät (101) die Transaktionsnummer nach dem Empfangen verschlüsseln kann;
- Aufrufen einer Anwendung auf dem Kommunikationsendgerät (101) nach Empfang der Kurznachricht;
- Empfangen der Transaktionsnummer mittels der Anwendung durch eine Benutzereingabe;
- Verschlüsseln der Transaktionsnummer mit dem öffentlichen Schlüssel;
- Übermitteln der verschlüsselten Transaktionsnummer mittels einer Kurznachricht an die Transaktionseinheit (150);
- Entschlüsseln der mittels der Kurznachricht übermittelten Transaktionsnummer durch die Transaktionseinheit (150) mittels eines zu dem öffentlichen Schlüssel gehörenden privaten Schlüssels; und
- Authentifizieren der Transaktion mittels eines Vergleichs der an den Transaktionsterminal (160) übermittelten Transaktionsnummer mit der vom Kommunikationsendgerät (101) empfangenen Transaktionsnummer.

2. Das Verfahren gemäß Anspruch 1, wobei das Verfahren die weiteren Schritte umfasst:
- Übergeben der Authentifizierungsanfrage an einen Kurznachrichtendienst;
- Verschlüsseln der Authentifizierungsanfrage durch den Kurznachrichtendienst mit einem zweiten Schlüssel;
- Entschlüsseln der Authentifizierungsanfrage mit dem zweiten Schlüssel durch das Kommunikationsendgerät (101);
- Verschlüsseln der Transaktionsnummer mit dem zweiten Schlüssel durch das Kommunikationsendgerät (101); und
- Entschlüsselung der Transaktionsnummer mit dem zweiten Schlüssel durch den Kurznachrichtendienst oder die Transaktionseinheit.

3. Das Verfahren gemäß Anspruch 2, wobei mittels einer Dateneinheit des Kurznachrichtendienstes ein Einmal-Passwort erstellt wird, das zusammen mit der Authentisierungsanfrage an das Kommunikationsendgerät (101) übermittelt wird, die Transaktionsnummer vom Kommunikationsendgerät (101) mit dem Einmal-Passwort verknüpft wird, und die Authentifizierung der Transaktionsnummer mit der Überprüfung des Einmal-Passworts durch den Kurznachrichtendienst verknüpft wird.

4. Das Verfahren gemäß Anspruch 3, wobei die Transaktionsnummer erst nach Überprüfung des Einmal-Passworts durch den Kurznachrichtendienst an die Transaktionseinheit (150) weitergeleitet wird.

5. Das Verfahren gemäß einer der vorangehenden Ansprüche, wobei die Transaktionseinheit (150) prüft, ob der Transaktionsterminal (160) dem Nutzer zugeordnet ist.

6. Das Verfahren gemäß Anspruch 5, wobei der Transaktionsterminal (160) für die Transaktionseinheit (150) eindeutig identifizierbar ist.

7. Das Verfahren gemäß Anspruch 6, wobei das Kommunikationsendgerät (101) für die Transaktionseinheit (150) eindeutig identifizierbar ist und die Authentifizierung nur erfolgt, wenn der Transaktionsterminal (160) und das Kommunikationsendgerät (101) nicht identisch sind.

8. Das Verfahren gemäß einer der vorangehenden Ansprüche, wobei sich der Nutzer vor dem Empfangen der Transaktionsnummer mittels der Anwendung identifizieren muss.

9. Das Verfahren gemäß Anspruch 8, wobei die Identifizierung mittels eines individuellen Merkmals des Nutzers erfolgt, das in der Transaktionseinheit (150) hinterlegt ist, und die Transaktionsnummer mit dem individuellen Merkmal verknüpft wird, so dass die Transaktionseinheit (150) den Nutzer des Kommunikationsendgerätes (101) anhand des individuellen Merkmals identifizieren kann.

10. Das Verfahren gemäß Anspruch 9, wobei das individuelle Merkmal zur Verschlüsselung der Transaktionsnummer verwendet wird und die Transaktionseinheit (150) die Transaktionsnummer mittels des hinterlegten individuellen Merkmals entschlüsseln kann.

11. Das Verfahren gemäß einer der vorangehenden Ansprüche, umfassend den weiteren Schritt:
- Durchführen der Transaktion durch die Transaktionseinheit (150).

12. Ein Kommunikationsendgerät (101), zur Durchführung des in Anspruch 1 definierten Verfahrens konfiguriert, das eingerichtet ist, eine Kurznachricht mit einem Schlüssel zu empfangen, nach Erhalt der Kurznachricht eine Anwendung zu starten, die die Eingabe einer Transaktionsnummer ermöglicht, das Kommunikationsendgerät (101) weiter dazu eingerichtet ist, die Transaktionsnummer mit dem Schlüssel zu verschlüsseln und die verschlüsselte Transaktionsnummer per Kurznachricht zu versenden.

13. Ein System umfassend einen Transaktionsterminal (160), ein Kommunikationsendgerät (101) eines Nutzers, eine Transaktionseinheit (150), einen ersten gesicherten Kommunikationskanal und einen zweiten Kommunikationskanal, wobei der zweite Kommunikationskanal verschieden vom ersten Kommunikationskanal ist, wobei die Transaktionseinheit (150) eingerichtet ist, eine eindeutige Transaktionsnummer als Reaktion auf eine mittels des Transaktionsterminals (160) initiierte Transaktionsanfrage des Nutzers zu erzeugen und mittels des ersten gesicherten Kommunikationskanals an den Transaktionsterminal (160) zu übermitteln, die Transaktionseinheit (150) weiter eingerichtet ist, eine Authentifizierungsanfrage zum Kommunikationsendgerät (101) mittels des zweiten Kommunikationskanals zu übermitteln, wobei die Übermittlung der Authentifizierungsanfrage den Empfang einer Kurznachricht durch das Kommunikationsendgerät (101) umfasst, das Kommunikationsendgerät (101) nach Empfang der Kurznachricht eingerichtet ist, eine Anwendung zum Empfangen der Transaktionsnummer durch eine Benutzereingabe aufzurufen und die Transaktionsnummer mittels einer Kurznachricht an die Transaktionseinheit (150) zu übermitteln, und die Transaktionseinheit (150) weiter eingerichtet ist die Transaktion mittels eines Vergleichs der an den Transaktionsterminal (160) übermittelten Transaktionsnummer mit der vom Kommunikationsendgerät (101) empfangenen Transaktionsnummer zu authentifizieren, wobei die Transaktionseinheit (150) weiterhin eingerichtet ist, mit der Authentisierungsanfrage einen öffentlichen Schlüssel zu übermitteln, das Kommunikationsendgerät (101) weiter eingerichtet ist, den öffentlichen Schlüssel zu empfangen und die Transaktionsnummer mit dem öffentlichen Schlüssel zu verschlüsseln, und die Transaktionseinheit (150) weiter eingerichtet ist, die mit einem zu dem öffentlichen Schlüssel gehörenden privaten Schlüssel verschlüsselte Transaktionsnummer zu entschlüsseln

## Claims

1. A method for authorizing transactions, wherein the method includes the following steps:
- generating a unique transaction number by means of a transaction unit (150) as a reaction to a transaction request of a transaction terminal (160) of a user;
- transferring the transaction number from the transaction unit (150) to the transaction terminal (160) by means of a first secured communications channel;
- transferring an authorization request from the transaction unit (150) to a communications terminal (101) of the user by means of a second communications channel, which is different from the first secured communications channel, wherein the transfer of the authentication request includes the receipt of a short message through the communications terminal (101), and wherein the authentication request contains a public key, with which the communications terminal (101) can encrypt the transaction number after the receipt;
- calling up an application on the communications terminal (101) after receipt of the short message;
- receipt of the transaction number by means of the application through a user input;
- encrypting of the transaction number with the public key;
- transferring of the encrypted transaction number by means of a short message to the transaction unit (150);
- decrypting of the transaction number transferred by means of short message by the transaction unit (150) by means of a private key pertaining to the public key; and
- authentication of the transaction by means of a comparison of the transaction number transferred to the transaction terminal (160), with the transaction number received from the communications terminal (101).

2. The method according to claim 1, wherein the method includes the further steps:
- transferring the authentication request to a short message service;
- encrypting of the authentication request through the short message service with a second key;
- decrypting of the authentication request with the second key through the communications terminal (101);
- encryption of the transaction number with the second key through the communications terminal (101); and
- decryption of the transaction number with the second key through the short message service or the transaction unit.

3. The method according to claim 2, wherein, by means of a data unit of the short message service, a one-time password is created, which is transferred to the communications terminal (101) together with the authentication request, the transaction number is linked with the one-time password by the communication terminal(101), and the authentication of the transaction number is linked with the verification of the password by the short message service.

4. The method according to claim 3, wherein the transaction number is conveyed on to the transaction unit (150) after verification of the one-time password through the short message system.

5. The method according to one of the preceding claims, wherein the transaction unit (150) checks if the transaction terminal (160) is assigned to the user.

6. The method according to claim 5, wherein the transaction terminal (160) is unambiguously identifiable for the transmission unit (150).

7. The method according to claim 6, wherein the communications terminal (101) is unambiguously identifiable for the transaction unit (150) and the authentication only occurs if the transaction terminal (160) and the communications terminal (101) are not identical.

8. The method according to one of the preceding claims, wherein the user must identify themselves, before the receipt of the transaction number, by means of the application.

9. The method according to claim 8, wherein the identification occurs by means of an individual feature of the user which is deposited in the transaction unit (150), and the transaction number is linked with the individual feature, so that the transaction unit (150) can identify the user of the communications terminal (101) based on the individual feature.

10. The method according to claim 9, wherein the individual feature is used to encrypt the transaction number and the transaction unit (150) can decrypt the transaction number by means of the deposited individual feature.

11. The method according to one of the preceding claims, including the further step:
- carrying out of the transaction through the transaction unit (150).

12. A communications terminal (101), configured to carry out the method defined in claim 1, which is set up to receive a short message with a key, to start an application after receipt of the short message, which application makes the input of a transaction number possible, the communications terminal (101) is further set up to encrypt the transaction number with the key and to send the encrypted transaction number per short message.

13. A system including a transaction terminal (160), a communications terminal (101) of a user, a transaction unit (150), a first secured communications channel and a second communications channel, wherein the second communications channel is different from the first communications channel, wherein the transaction unit (150) is set up to generate a unique transaction number, as a reaction to a transaction request of the user initiated by means of the transaction terminal (160), and to transfer said number, by means of a first secured communication channel, to the communications terminal (160), the transaction unit (150) is further set up to transfer an authentication request to the communications terminal (101) by means of the second communications channel, wherein the transfer of the authentication request includes the receipt of the short message through the communications terminal (101), the communications terminal (101), after receipt of the short message, is set up to call up an application to receive the transaction number through a user input, and to transfer the transaction number, by means of a short message, to the transaction unit (150), and the transaction unit (150) is further set up to authenticate the transaction by means of a comparison of the transaction number transferred to the transaction terminal (160) with the transaction number received by the communications terminal (101), wherein the transaction unit (150) is further set up to transfer a public key with the authentication request, the communications terminal (101) is further set up to receive the public key and to encrypt the transaction number with the public key, and the transaction unit (150) is further set up to decrypt the transaction number encrypted with a private key pertaining to the public key.

## Revendications

1. Procédé servant à autoriser des transactions, dans lequel le procédé comprend les étapes suivantes :
- de génération d'un numéro de transaction unique au moyen d'une unité de transaction (150) en réponse à une demande de transaction d'un terminal de transaction (160) d'un utilisateur ;
- de transmission du numéro de transaction par l'unité de transaction (150) au terminal de transaction (160) au moyen d'un premier canal de communication sécurisé ;
- de transmission d'une demande d'authentification par l'unité de transaction (150) à un terminal de communication (101) de l'utilisateur au moyen d'un deuxième canal de communication, qui est différent du premier canal de communication sécurisé, dans lequel la transmission de la demande d'authentification comprend la réception d'un message court par le terminal de communication (101), et dans lequel la demande d'authentification contient une clé publique, avec laquelle le terminal de communication (101) peut crypter le numéro de transaction après réception ;
- d'appel d'une application sur le terminal de communication (101) après réception du message court ;
- de réception du numéro de transaction au moyen de l'application par une saisie d'utilisateur ;
- de cryptage du numéro de transaction avec la clé publique ;
- de transmission du numéro de transaction crypté au moyen d'un message court à l'unité de transaction (150) ;
- de décryptage du numéro de transaction transmis au moyen du message court par l'unité de transaction (150) au moyen d'une clé privée relevant de la clé publique ; et
- d'authentification de la transaction au moyen d'une comparaison du numéro de transaction transmis au terminal de transaction (160) avec le numéro de transaction reçu par le terminal de communication (101).

2. Procédé selon la revendication 1, dans lequel le procédé comprend les autres étapes :
- de transfert de la demande d'authentification à un service d'envoi de messages courts ;
- de cryptage de la demande d'authentification par le service d'envoi de messages courts avec une deuxième clé ;
- de décryptage de la demande d'authentification avec la deuxième clé par le terminal de communication (101) ;
- de cryptage du numéro de transaction avec la deuxième clé par le terminal de communication (101) ; et
- de décryptage du numéro de transaction avec la deuxième clé par le service d'envoi de messages courts ou l'unité de transaction.

3. Procédé selon la revendication 2, dans lequel est créé au moyen d'une unité de données du service d'envoi de messages courts un mot de passe à usage unique, qui est transmis conjointement avec la demande d'authentification au terminal de communication (101), le numéro de transaction est combiné par le terminal de communication (101) au mot de passe à usage unique, et l'authentification du numéro de transaction est combinée à la vérification du mot de passe à usage unique par le service d'envoi de messages courts.

4. Procédé selon la revendication 3, dans lequel le numéro de transaction est redirigé seulement après vérification du mot de passe à usage unique par le service d'envoi de messages courts à l'unité de transaction (150).

5. Procédé selon l'une quelconque des revendications précédentes, dans lequel l'unité de transaction (150) contrôle si le terminal de transaction (160) est associé à l'utilisateur.

6. Procédé selon la revendication 5, dans lequel le terminal de transaction (160) pour l'unité de transaction (150) peut être identifié sans ambiguïté.

7. Procédé selon la revendication 6, dans lequel le terminal de communication (101) pour l'unité de transaction (150) peut être identifié sans ambiguïté et l'authentification a lieu seulement quand le terminal de transaction (160) et le terminal de communication (101) ne sont pas identiques.

8. Procédé selon l'une quelconque des revendications précédentes, dans lequel l'utilisateur doit s'identifier avant la réception du numéro de transaction au moyen de l'application.

9. Procédé selon la revendication 8, dans lequel l'identification a lieu au moyen d'une caractéristique individuelle de l'utilisateur, qui est enregistrée dans l'unité de transaction (150), et le numéro de transaction est combiné à la caractéristique individuelle de sorte que l'unité de transaction (150) peut identifier l'utilisateur du terminal de communication (101) à l'aide de la caractéristique individuelle.

10. Procédé selon la revendication 9, dans lequel la caractéristique individuelle est utilisée pour crypter le numéro de transaction et l'unité de transaction (150) peut décrypter le numéro de transaction au moyen de la caractéristique individuelle enregistrée.

11. Procédé selon l'une quelconque des revendications précédentes, comprenant l'étape supplémentaire :
- de mise en oeuvre de la transaction par l'unité de transaction (150).

12. Terminal de communication (101) configuré pour mettre en oeuvre le procédé défini dans la revendication 1, qui est mis au point pour recevoir un message court avec une clé, pour lancer à réception du message court une application, qui permet la saisie du numéro de transaction, lequel terminal de communication (101) est par ailleurs mis au point pour crypter le numéro de transaction avec la clé et pour envoyer le numéro de transaction crypté par message court.

13. Système comprenant un terminal de transaction (160), un terminal de communication (101) d'un utilisateur, une unité de transaction (150), un premier canal de communication sécurisé et un deuxième canal de communication, dans lequel le deuxième canal de communication est différent du premier canal de communication, dans lequel l'unité de transaction (150) est mise au point pour générer un numéro de transaction unique en réponse à une demande de transaction, initiée au moyen du terminal de transaction (160), de l'utilisateur et pour le transmettre au moyen du premier canal de communication sécurisé au terminal de transaction (160), l'unité de transaction (150) est mise au point par ailleurs pour transmettre une demande d'authentification au terminal de communication (101) au moyen du deuxième canal de communication, dans lequel la transmission de la demande d'authentification comprend la réception d'un message court par le terminal de communication (101), le terminal de communication (101) est mis au point à réception du message court pour appeler une application servant à recevoir le numéro de transaction par une saisie d'utilisateur et pour transmettre le numéro de transaction au moyen d'un message court à l'unité de transaction (150), et l'unité de transaction (150) est par ailleurs mise au point pour authentifier la transaction au moyen d'une comparaison du numéro de transaction transmis au terminal de transaction (160) au numéro de transaction reçu par le terminal de communication (101), dans lequel l'unité de transaction (150) est par ailleurs mise au point pour transmettre avec la demande d'authentification une clé publique, le terminal de communication (101) est par ailleurs mis au point pour recevoir la clé publique et pour crypter le numéro de transaction avec la clé publique, et l'unité de transaction (150) est par ailleurs mise au point pour décrypter le numéro de transaction crypté avec une clé privée relevant de la clé publique.
